# EUROPEAN PATENT APPLICATION

(11) **EP 3 182 277 A1**
(43) Date of publication of application: **21.06.2017**
(21) Application number: 14901530.7
(22) Date of filing: 09.09.2014
(51) Int. Cl.: G06F 9/00

(54) **PROCESSOR**

(71) Applicant: Huawei Technologies Co. Ltd., Shenzhen, Guangdong 518129 (CN)
(72) Inventor: LIU, Xiaocheng, Shenzhen Guangdong 518129 (CN); HUANG, Xianluo, Shenzhen Guangdong 518129 (CN); ZHAO, Yuqing, Shenzhen Guangdong 518129 (CN)
(74) Representative: Goddar, Heinz J.
(86) International application number: PCT/CN2014/086092
(87) International publication number: WO 2016/037307

(57) **Abstract**

A processor (100) is disclosed. The processor (100) includes: at least one execution unit group (121, 122, 12k), where each execution unit group in the at least one execution unit group (121, 122, 12k) includes multiple serially-connected execution units; and at least one resource unit (110), where each resource unit in the at least one resource unit (110) is serially connected to one or more execution unit groups in the at least one execution unit group (121, 122, 12k) separately. According to the processor, execution units in an execution unit group are serially connected, and a resource unit is serially connected to one or more execution unit groups, so that only a few execution units can be directly connected to the resource unit, and cable layout congestion at the resource unit and resulting signal interference are avoided. Therefore, a cable layout area of a chip can be reduced, and signal quality of the chip can be improved.

## Description

### TECHNICAL FIELD

The present invention relates to the chip field, and in particular, to a processor in the chip field.

### BACKGROUND

With rapid development of information technologies, an integrated circuit (Integration Chip, "IC" for short) has been greatly developed toward miniaturization, low power consumption, and high reliability. Currently, an IC design procedure may include a front end design and a back end design. The front end design may also be referred to as a logical design, and the back end design may also be referred to as a physical design. A task of the front end design is mainly to perform an operation such as emulation and verification, logic synthesis, timing analysis, and formal verification on a circuit described by using a hardware description language (Hardware Description Language, "HDL" for short), so as to obtain a gate-level netlist circuit that is based on a process library and that is of a chip. A task of the back end design mainly includes implementing the gate-level netlist circuit as a layout, that is, performing an operation of placement and cable layout; and attesting that the layout meets a timing requirement, conforms to a design rule, and so on.

In the foregoing placement and cable layout phase, work of automatic placement and cable layout can be implemented by using a tool. An original file designed in the front end is converted into a physical design that can be applied to back end automation, and an electronic design automation (Electronic Design Automation, "EDA" for short) tool may be used to independently design and establish a cell library, so as to integrate layout editing, placement, cable layout, and verification into one design environment, so that a designer can complete an operation related to the automatic placement and cable layout. An automatic placement and cable layout technology of a large-scale integrated circuit can support an application of multiple optimized placement engines, and a customized design of a complex high-performance chip that has up to 10 layers of interconnected metal may be performed in the field of deep submicro.

In a current IC placement and cable layout procedure, a star connection is generally used to connect components. In the star connection, a component is used as a central node, and other components are directly connected to the central node, so as to form a network of a star topology structure. The network belongs to a centralized control network. The central node performs centralized pass control management on the whole network, and each node that needs to send data sends the to-be-sent data to the central node. As a result, the central node is extremely complex, and a cable layout is extremely crowded.

Therefore, for an integrated circuit that uses a star connection to perform placement and cable layout, a cable layout at a central node is congested, and signal quality at the central node is relatively poor. To ensure the signal quality at the central node, a cable layout area of a chip needs to be increased.

### SUMMARY

In view of this, embodiments of the present invention provide a processor, so that a cable layout area of a chip can be reduced, and signal quality of the chip can be improved.

According to a first aspect, a processor is provided. The processor includes: at least one execution unit group, where each execution unit group in the at least one execution unit group includes multiple serially-connected execution units; and at least one resource unit, where each resource unit in the at least one resource unit is serially connected to one or more execution unit groups in the at least one execution unit group separately.

With reference to the first aspect, in a first possible implementation manner of the first aspect, for each resource unit in the at least one resource unit, all execution units included in the one or more execution unit groups that are serially connected to the resource unit form a token ring, so that the resource unit can be accessed at a same moment by at most one execution unit that obtains a token.

With reference to the first possible implementation manner of the first aspect, in a second possible implementation manner of the first aspect, the processor further includes a bus. For each resource unit in the at least one resource unit, all of the execution units included in the one or more execution unit groups that are serially connected to the resource unit are connected to the resource unit by using the bus. An output result of the resource unit is transmitted to the bus, and only the execution unit that obtains the token obtains the output result by using the bus.

With reference to the first or the second possible implementation manner of the first aspect, in a third possible implementation manner of the first aspect, an i^{th} execution unit XUᵢ in each execution unit group is specifically configured to: when i=1, determine a default 0^{th} uplink control signal, where a level of the default 0^{th} uplink control signal is a low level; or when 2≤i≤N, receive an (i-1)^{th} uplink control signal output by an (i-1)^{th} execution unit XUᵢ₋₁, where i is a natural number, and N is a quantity of execution units included in the execution unit group; generate an i^{th} local access signal according to whether the i^{th} execution unit XUᵢ obtains the token, where when the i^{th} execution unit XUᵢ obtains the token, a level of the i^{th} local access signal is a high level, or when the i^{th} execution unit XUᵢ does not obtain the token, the level of the i^{th} local access signal is a low level; and output an i^{th} uplink control signal by performing an OR operation on the (i-1)^{th} uplink control signal and the i^{th} local access signal.

Each resource unit in the at least one resource unit is specifically configured to: receive an N^{th} uplink control signal sent by an N^{th} execution unit XU_{N} that is serially connected to the resource unit; and when a level of the N^{th} uplink control signal is a high level, perform an access operation according to access information transmitted by the execution unit that obtains the token; or when the level of the N^{th} uplink control signal is a low level, skip performing the access operation.

With reference to the first or the second possible implementation manner of the first aspect, in a fourth possible implementation manner of the first aspect, an i^{th} execution unit XUᵢ in each execution unit group is specifically configured to: when i=1, determine a default 0^{th} uplink control signal, where a level of the default 0^{th} uplink control signal is a high level; or when 2≤i≤N, receive an (i-1)^{th} uplink control signal output by an (i-1)^{th} execution unit XUᵢ₋₁, where i is a natural number, and N is a quantity of execution units included in the execution unit group; generate an i^{th} local access signal according to whether the i^{th} execution unit XUᵢ obtains the access authorization, where when the i^{th} execution unit XUᵢ obtains the token, a level of the i^{th} local access signal is a low level, or when the i^{th} execution unit XUᵢ does not obtain the token, the level of the i^{th} local access signal is a high level; and output an i^{th} uplink control signal by performing an AND operation on the (i-1)^{th} uplink control signal and the i^{th} local access signal.

Each resource unit in the at least one resource unit is specifically configured to: receive an N^{th} uplink control signal sent by an N^{th} execution unit XU_{N} in each execution unit group that is serially connected to the resource unit; and when a level of the N^{th} uplink control signal is a low level, perform an access operation according to access information transmitted by the execution unit that obtains the token; or when the level of the N^{th} uplink control signal is a high level, skip performing the access operation.

With reference to any one of the second to the fourth possible implementation manners of the first aspect, in a fifth possible implementation manner of the first aspect, the execution unit that obtains the token releases the token after obtaining the output result by using the bus.

With reference to any one of the first to the fifth possible implementation manners of the first aspect, in a sixth possible implementation manner of the first aspect, not all access delays of all the execution units that form the token ring are the same.

With reference to the sixth possible implementation manner of the first aspect, in a seventh possible implementation manner of the first aspect, in multiple execution units that belong to a same execution unit group, an access delay of a 1^{st} execution unit XU₁ is the largest, and an access delay of an N^{th} execution unit XU_{N} is the smallest, where N is a quantity of execution units included in the execution unit group.

With reference to any one of the first aspect, or the first to the seventh possible implementation manners of the first aspect, in an eighth possible implementation manner of the first aspect, a quantity of execution units included in each execution unit group is the same or different.

With reference to any one of the first aspect, or the first to the eighth possible implementation manners of the first aspect, in a ninth possible implementation manner of the first aspect, the at least one resource unit includes a calculation unit and/or a storage unit.

On a basis of the foregoing technical solution, and according to the processor in the embodiments of the present invention, execution units in an execution unit group are serially connected, and a resource unit is serially connected to one or more execution unit groups, so that only a few execution units can be directly connected to the resource unit, and cable layout congestion at the resource unit and resulting signal interference are avoided. Therefore, a cable layout area of a chip can be reduced, and signal quality of the chip can be improved.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic block diagram of a processor according to an embodiment of the present invention;
FIG. 2 is a schematic diagram of a signal flow of an execution unit according to an embodiment of the present invention; and
FIG. 3 is another schematic block diagram of a processor according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

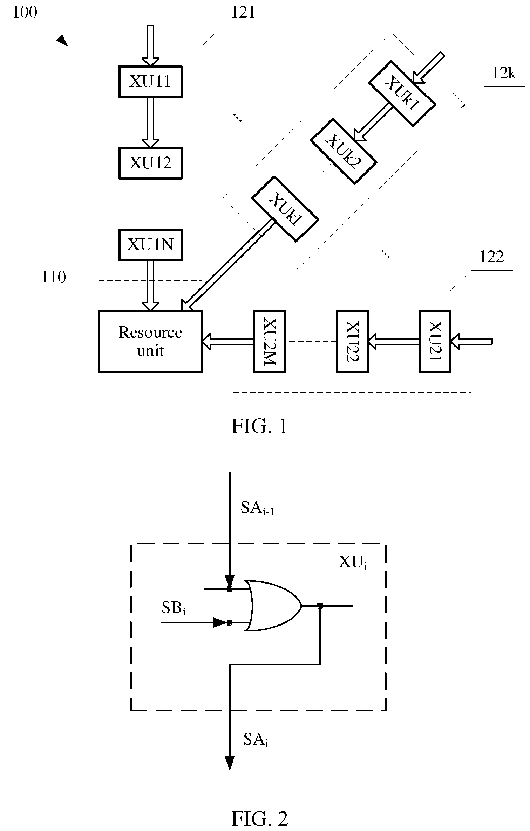

FIG. 1 shows a schematic block diagram of a processor 100 according to an embodiment of the present invention. As shown in FIG. 1, the processor 100 includes:
at least one execution unit group 121, 122, ..., and 12K, where each execution unit group in the at least one execution unit group 121, 122, ..., and 12K includes multiple serially-connected execution units; and
at least one resource unit 110, where each resource unit in the at least one resource unit 110 is serially connected to one or more execution unit groups in the at least one execution unit group 121, 122, ..., and 12K separately.

Specifically, as shown in FIG. 1, the processor 100 according to this embodiment of the present invention may include at least one resource unit 110 and K execution unit groups 121, 122, ..., and 12K, where K is a natural number and K≥1. For each resource unit in the at least one resource unit 110, each resource unit can be serially connected to one or more execution unit groups separately. A quantity of execution unit groups serially connected to each resource unit may be the same or may be different. In addition, the one or more execution unit groups serially connected to each resource unit may include a same execution unit group, or may be totally different execution unit groups. For each execution unit group in the at least one execution unit group 121, 122, ..., and 12K, each execution unit group may include multiple execution units. A quantity of execution units included in each execution unit group may be the same or may be different. In addition, the multiple execution units in each execution unit group are serially connected.

For example, the execution unit group 121 includes N execution units XU11, XU12, ..., and XU1N that are serially connected sequentially, where N is a quantity of execution units included in the execution unit group 121 and is a natural number; the execution unit group 122 includes M execution units XU21, XU22, ..., and XU2M that are serially connected sequentially, where M is a quantity of execution units included in the execution unit group 122 and is a natural number. The resource unit 110 is serially connected to the execution unit groups 121 and 122 separately. That is, the resource unit 110 is serially connected to the execution unit XUIN in the execution unit group 121, and the resource unit 110 is serially connected to the execution unit XU2M in the execution unit group 122.

Therefore, according to the processor in this embodiment of the present invention, execution units in an execution unit group are serially connected, and a resource unit is serially connected to one or more execution unit groups, so that only a few execution units can be directly connected to the resource unit, and cable layout congestion at the resource unit and resulting signal interference are avoided. Therefore, a cable layout area of a chip can be reduced, and signal quality of the chip can be improved.

In addition, in the processor in this embodiment of the present invention, because only a few execution units are directly connected to the resource unit, and the execution units in the execution unit group are serially connected, the execution units can be disposed near the resource unit, so as to avoid using a relatively long wire because of a relatively long distance between the execution units and the resource unit, and avoid resulting signal quality deterioration, so that the signal quality of the chip can be further significantly improved.

It should be understood that, in this embodiment of the present invention, the multiple execution units included in each execution unit group may include one or more same execution units, or may include totally different execution units. It should be further understood that, in this embodiment of the present invention, in addition to being capable of being serially connected to the one or more execution unit groups separately, each resource unit can be serially connected to one or more execution units directly. This is not limited in this embodiment of the present invention.

It should be further understood that, in this embodiment of the present invention, the processor that includes one resource unit and that is shown in FIG. 1 is merely used as an example to make a description. However, the present invention is not limited thereto. The processor according to this embodiment of the present invention may further include more resource units and one or more execution unit groups serially connected to each resource unit separately.

In this embodiment of the present invention, the processor may use multiple manners to make each resource unit be accessed at a same moment by at most one execution unit, that is, each resource unit can be accessed at a same moment by at most one execution unit in all execution units included in the one or more execution unit groups that are serially connected to the resource unit.

For example, the processor may use various existing resource contention methods to control access to the resource unit performed by the execution units, so that one resource unit can be accessed at any moment by at most one execution unit. For another example, the processor may use a token passing (Token Passing) technology to make a token be sequentially passed in a token ring (Token Ring). In the token ring, only a node that obtains the token has access permission, transmission permission, or the like, so that one resource unit can be accessed at any moment by at most one execution unit.

Specifically, in this embodiment of the present invention, optionally, for each resource unit in the at least one resource unit, all of the execution units included in the one or more execution unit groups that are serially connected to the resource unit form a token ring, so that the resource unit can be accessed at a same moment by at most one execution unit that obtains a token.

The processor shown in FIG. 1 is still used as an example to make a description. The resource unit is serially connected to K execution unit groups 121, 122, ..., and 12K separately. All execution units included in the K execution unit groups form a token ring, and a token is sequentially passed in the token ring in a circulation mode. Therefore, at any moment, at most one execution unit obtains the token, and only the execution unit that obtains the token has permission to access the resource unit.

Therefore, in this embodiment of the present invention, a token ring is formed by all execution units corresponding to a resource unit, and only an execution unit that obtains a token can access the resource unit, so that each resource unit can be accessed at a same moment by at most one execution unit that obtains a token. Therefore, a cable layout area and cable layout density of a chip can be further reduced, and signal quality of the chip can be further improved.

It should be understood that, in this embodiment of the present invention, the processor may include multiple resource units, and each resource unit may have a token ring corresponding to the resource unit, so that each resource unit can be accessed at a same moment by at most one execution unit that obtains a token.

In this embodiment of the present invention, for any execution unit group 12k, k is a natural number and 1≤k≤K. The execution unit group 12k includes L execution units XUkl, XUk2, ..., and XUkL that are serially connected sequentially. The execution unit XUkL is serially connected to the resource unit 110. Each execution unit XUk*l* (*l* is a natural number and 2≤*l*≤L) in the execution unit group 12k may be configured to: receive an uplink control signal output by a previous execution unit XUk(*l*-1) that is serially connected to the current execution unit XUk*l*; determine a local access signal according to whether the current execution unit XUk*l* obtains access authorization, that is, according to whether the current execution unit XUk*l* obtains the token, so that the resource unit can be accessed at any moment by at most one execution unit that obtains the access authorization; and output a next uplink control signal according to the uplink control signal and the local access signal. The resource unit can receive an uplink control signal sent by the execution unit that is serially connected to the resource unit, and can determine, according to the uplink control signal, whether to perform an access operation, so that the execution unit that obtains the access authorization can access the resource unit.

It should be understood that, in this embodiment of the present invention, the 1^{th} execution unit XUk1 can determine a default 0^{th} uplink control signal, and can output, according to the default uplink control signal and the determined local access signal, an uplink control signal provided to be used by a 2^{nd} execution unit XUk2, so that the execution unit that obtains the access authorization can access the resource unit.

It should be understood that, in this embodiment of the present invention, because execution units in an execution unit group are serially connected, and the execution unit group is connected to the resource unit, for ease of description, an order of an execution unit may be set according to a distance between each execution unit in the execution unit group and the resource unit. For example, as shown in FIG. 1, for any execution unit group 12k, an execution unit XUk1 is a 1^{st} execution unit, an XUk2 is a 2^{nd} execution unit, ..., and an XUkL is an L^{th} execution unit. It should be further understood that this is merely used as an example to make a description in this embodiment of the present invention. However, the present invention is not limited thereto.

In this embodiment of the present invention, to make each resource unit be accessed at a same moment by at most one execution unit, a token (Token) control manner may be used, so that at most one execution unit can obtain access authorization at a same moment, and only the execution unit that obtains the access authorization can access the resource unit.

Specifically, each execution unit can generate a local access signal according to whether the access authorization is currently obtained. For example, when an execution unit obtains the access authorization, if an effective high-level mechanism is used, a local access signal generated by the execution unit has a high level, and a current uplink control signal and subsequent uplink control signals have a same type of level, that is, also have high levels, so that the execution unit that obtains the access authorization can access the resource unit. On the contrary, if the execution unit does not obtain the access authorization, the generated local access signal has a low level, so that the execution unit that does not obtain the access authorization cannot access the resource unit.

Similarly, if an effective low-level mechanism is used, the local access signal generated by the execution unit may have a low level, and the current uplink control signal and the subsequent uplink control signals have low levels, so that the execution unit that obtains the access authorization can access the resource unit. On the contrary, if the execution unit does not obtain the access authorization, the generated local access signal has a high level, so that the execution unit cannot access the resource unit.

Therefore, in this embodiment of the present invention, as shown in FIG. 2, optionally, for any execution unit group, an i^{th} execution unit XUᵢ in each execution unit group is specifically configured to:
when i=1, determine a default 0^{th} uplink control signal, where a level of the default 0^{th} uplink control signal is a low level; or when 2≤i≤N, receive an (i-1)^{th} uplink control signal SAᵢ₋₁ output by an (i-1)^{th} execution unit XUᵢ₋₁, where i is a natural number, and N is a quantity of execution units included in the execution unit group;
generate an i^{th} local access signal SBᵢ according to whether the i^{th} execution unit XUᵢ obtains the token, where when the i^{th} execution unit XUᵢ obtains the token, a level of the i^{th} local access signal SBᵢ is a high level; or when the i^{th} execution unit XUᵢ does not obtain the token, the level of the i^{th} local access signal SBᵢ is a low level; and
output an i^{th} uplink control signal SAᵢ by performing an OR operation on the (i-1)^{th} uplink control signal SAᵢ₋₁ and the i^{th} local access signal SBᵢ.

Each resource unit in the at least one resource unit is specifically configured to:
receive an N^{th} uplink control signal SAᵢ sent by an N^{th} execution unit XU_{N} that is serially connected to the resource unit; and
when a level of the N^{th} uplink control signal SAᵢ is a high level, perform an access operation according to access information transmitted by the execution unit that obtains the token; or
when the level of the N^{th} uplink control signal SAᵢ is a low level, skip performing the access operation.

Optionally, in this embodiment of the present invention, as shown in FIG. 2, for any execution unit group, an i^{th} execution unit XUᵢ in each execution unit group is specifically configured to:
when i=1, determine a default 0^{th} uplink control signal, where a level of the default 0^{th} uplink control signal is a high level; or when 2≤i≤N, receive an (i-1)^{th} uplink control signal SAᵢ₋₁ output by an (i-1)^{th} execution unit XUᵢ₋₁, where i is a natural number, and N is a quantity of execution units included in the execution unit group;
generate an i^{th} local access signal SBᵢ according to whether the i^{th} execution unit XUᵢ obtains the access authorization, where when the i^{th} execution unit XUᵢ obtains the token, a level of the i^{th} local access signal SBᵢ is a low level; or when the i^{th} execution unit XUᵢ does not obtain the token, the level of the i^{th} local access signal SBᵢ is a high level; and
output an i^{th} uplink control signal SAᵢ by performing an AND operation on the (i-1)^{th} uplink control signal SAᵢ₋₁ and the i^{th} local access signal SBᵢ.

Each resource unit in the at least one resource unit is specifically configured to:
receive an N^{th} uplink control signal SAᵢ sent by an N^{th} execution unit XU_{N} in each execution unit group that is serially connected to the resource unit; and
when a level of the N^{th} uplink control signal SAᵢ is a low level, perform an access operation according to access information transmitted by the execution unit that obtains the token; or
when the level of the N^{th} uplink control signal SAᵢ is a high level, skip performing the access operation.

It should be understood that, in this embodiment of the present invention, that each execution unit performs an "OR" operation or an "AND" operation is merely used as an example. However, the present invention is not limited thereto. Each execution unit may further perform another logical operation, so that only an execution unit that obtains access authorization can access a resource unit, and the resource unit can be accessed at a same moment by at most one execution unit that obtains the access authorization.

Therefore, according to the processor in this embodiment of the present invention, execution units in an execution unit group are serially connected, a resource unit is serially connected to one or more execution unit groups, and each resource unit can be accessed at a same moment by at most one execution unit that obtains access authorization, so that only a few execution units can be directly connected to the resource unit, and the resource unit can be accessed at any moment by at most one execution unit. Therefore, cable layout congestion at the resource unit and signal interference can be avoided, a cable layout area of a chip can be reduced, and signal quality of the chip can be significantly improved.

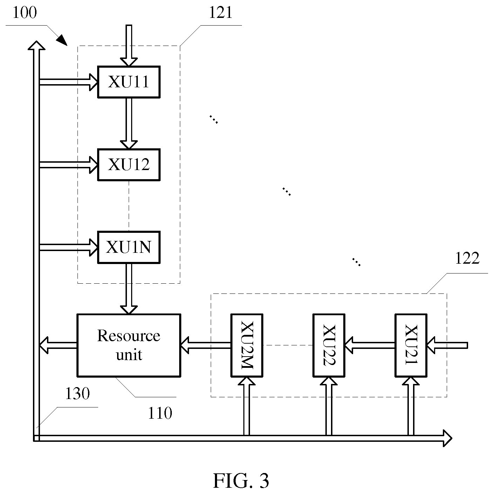

With reference to FIG. 1 and FIG. 2, the foregoing gives a detailed description of uplink signal and data transmission of the processor according to this embodiment of the present invention. The following gives a detailed description of downlink signal and data transmission of the processor with reference to FIG. 3.

In this embodiment of the present invention, optionally, as shown in FIG. 3, the processor 100 further includes a bus 130. For each resource unit in the at least one resource unit 110, all of the execution units included in the one or more execution unit groups that are serially connected to the resource unit are connected to the resource unit by using the bus 130. An output result of the resource unit is transmitted to the bus 130, and only the execution unit that obtains the token obtains the output result by using the bus 130.

Specifically, in this embodiment of the present invention, in an uplink direction, for any execution unit group, each execution unit transmits a control signal and/or access information to the resource unit by using a serial connection; in a downlink direction, the output result of the resource unit 110 may be broadcast to the bus 130, but only an execution unit that obtains the access authorization can obtain the output result by using the bus 130.

It should be understood that, in this embodiment of the present invention, the uplink direction indicates a direction in which information is transmitted from an execution unit to a resource unit; correspondingly, the downlink direction indicates a direction in which information is transmitted from a resource unit to an execution unit. This is merely used as an example to make a description in the present invention. However, the present invention is not limited thereto.

It should be further understood that, in this embodiment of the present invention, the execution unit that obtains the token or the access authorization may also use another manner to obtain the output result. This is not limited in this embodiment of the present invention.

In this embodiment of the present invention, optionally, the execution unit that obtains the token releases the token after obtaining the output result by using the bus. For example, after obtaining the output result, the execution unit that obtains the token may release the token by performing a negation operation on a signal, so that the token is sequentially passed to another execution unit in the token ring, and the another execution unit can obtain the token to access the resource unit. In this case, if the execution unit that releases the token does not re-obtain the token, the execution unit cannot continue to access the resource unit.

For example, as shown in FIG. 2, that the execution unit XU12 obtains the access authorization and uses the effective high-level mechanism is used as an example in the following to give a detailed description of an access procedure of a processing unit provided in this embodiment of the present invention.

Specifically, if at a same moment, only the execution unit XU12 obtains the access authorization and no other execution units obtain the access authorization, the XU11 generates a 1^{st} local access signal that has a low level, and performs an OR operation on the 1^{st} local access signal and a default 0^{th} uplink control signal that has a low level, so as to output a 1^{st} uplink control signal that has a low level to the XU12. The XU12 obtains the access authorization, and can generate a 2^{nd} local access signal that has a high level, so that all the XU12, ..., and the XU1N can output uplink control signals that have high levels, and the XU12 can access the resource unit 110. Therefore, the accessed resource unit 110 transmits the output result to the bus 130, and only the execution unit XU12 that obtains the access authorization can obtain the output result by using the bus 130. In this case, the execution unit XU12 may release the access authorization, and therefore, a local access signal generated by the execution unit XU12 has a low level.

In this embodiment of the present invention, optionally, the at least one resource unit 110 includes a calculation unit and/or a storage unit. For example, the storage unit is a random access memory (Random-Access Memory, "RAM" for short), or the storage unit may be a register. This is not limited in this embodiment of the present invention. Correspondingly, in this embodiment of the present invention, access to a resource unit performed by an execution unit may include both a read operation performed on the resource unit and a write operation performed on the resource unit.

It should be further understood that, in this embodiment of the present invention, when the resource unit is a calculation unit, the access to the resource unit performed by the execution unit may include requesting the resource unit to perform data calculation or the like. However, the present invention is not limited thereto.

In this embodiment of the present invention, optionally, not all access delays of all the execution units that form the token ring are the same.

Specifically, in this embodiment of the present invention, the access delay may indicate a delay between sending a local access signal by the execution unit, and obtaining the output result of the resource unit and releasing the access authorization by the execution unit. In this embodiment of the present invention, the access delays of the execution units may be set to be the same, or may be set to be different because of factors such as a cable layout delay. For example, delays of the execution units in a signal generation and transmission process may be set to be different. However, the present invention is not limited thereto.

In this embodiment of the present invention, optionally, in multiple execution units that belong to a same execution unit group, an access delay of a 1^{st} execution unit XU₁ is the largest, and an access delay of an N^{th} execution unit XU_{N} is the smallest, where N is a quantity of execution units included in the execution unit group.

Therefore, according to the processor in this embodiment of the present invention, execution units in an execution unit group are serially connected, and a resource unit is serially connected to one or more execution unit groups, so that only a few execution units can be directly connected to the resource unit, and cable layout congestion at the resource unit and resulting signal interference are avoided. Therefore, a cable layout area of a chip can be reduced, and signal quality of the chip can be improved.

In addition, in the processor in this embodiment of the present invention, because only a few execution units are directly connected to the resource unit, and the execution units in the execution unit group are serially connected, the execution units can be disposed near the resource unit, so as to avoid using a relatively long wire because of a relatively long distance between the execution units and the resource unit, and avoid resulting signal quality deterioration, so that the signal quality of the chip can be further significantly improved.

It should be understood that, in this embodiment of the present invention, when an IC design is performed on the processor according to this embodiment of the present invention, a processor emulator may be first written by using a high level language. The processor emulator can implement the foregoing function and requirement of the processor in this embodiment of the present invention. The high level language is, for example, a SystemC language, a Verilog language, or a VHDL language. Then, the function of the processor emulator is implemented by using a gate-level language, and a position is specified for each component. These components are gate-level components of a tape-out factory. In an implementation process of a submodule, positions of these components may be relative positions. When the submodule is integrated to a top layer, a position offset address may be allocated to each submodule. Finally, for execution units in an execution unit group, a serial connection may be used to access a resource unit. When a position is specified for each component, the execution units may be placed according to a signal flow provided in this embodiment of the present invention, so that the execution units are disposed near the resource unit, and therefore the signal quality of the chip can be further significantly improved.

It should be further understood that, in this embodiment of the present invention, the IC design and automatic placement and cable layout may also be performed on the processor according to this embodiment of the present invention on a basis of an existing IC design procedure. However, a position constraint rule needs to be added to the execution units and the resource unit. According to the position constraint rule, the execution units are placed according to the signal flow provided in this embodiment of the present invention, so that the execution units are disposed near the resource unit, and therefore the signal quality of the chip can be further significantly improved.

It should be understood that, the term "and/or" in the embodiments of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the embodiments of the present invention, "B corresponding to A" indicates that B is associated with A, and B may be determined according to A. However, it should further be understood that determining A according to B does not mean that B is determined according to A only; that is, B may also be determined according to A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A processor (100), wherein the processor (100) comprises:
at least one execution unit group (121, 122, 12k), wherein each execution unit group in the at least one execution unit group (121, 122, 12k) comprises multiple serially-connected execution units; and
at least one resource unit (110), wherein each resource unit in the at least one resource unit (110) is serially connected to one or more execution unit groups in the at least one execution unit group (121, 122, 12k) separately.

2. The processor (100) according to claim 1, wherein for each resource unit in the at least one resource unit (110), all execution units comprised in the one or more execution unit groups that are serially connected to the resource unit form a token ring, so that the resource unit can be accessed at a same moment by at most one execution unit that obtains a token.

3. The processor (100) according to claim 2, wherein the processor further comprises a bus (130); for each resource unit in the at least one resource unit (110), all of the execution units comprised in the one or more execution unit groups that are serially connected to the resource unit are connected to the resource unit by using the bus (130); an output result of the resource unit is transmitted to the bus (130), and only the execution unit that obtains the token obtains the output result by using the bus (130).

4. The processor (100) according to claim 2 or 3, wherein an i^{th} execution unit XUᵢ in each execution unit group is specifically configured to:
when i=1, determine a default 0^{th} uplink control signal, wherein a level of the default 0^{th} uplink control signal is a low level; or when 2≤i≤N, receive an (i-1)^{th} uplink control signal output by an (i-1)^{th} execution unit XUᵢ₋₁, wherein i is a natural number, and N is a quantity of execution units comprised in the execution unit group;
generate an i^{th} local access signal according to whether the i^{th} execution unit XUᵢ obtains the token, wherein when the i^{th} execution unit XUᵢ obtains the token, a level of the i^{th} local access signal is a high level; or when the i^{th} execution unit XUᵢ does not obtain the token, the level of the i^{th} local access signal is a low level; and
output an i^{th} uplink control signal by performing an OR operation on the (i-1)^{th} uplink control signal and the i^{th} local access signal, wherein
each resource unit in the at least one resource unit (110) is specifically configured to:
receive an N^{th} uplink control signal sent by an N^{th} execution unit XU_{N} that is serially connected to the resource unit; and
when a level of the N^{th} uplink control signal is a high level, perform an access operation according to access information transmitted by the execution unit that obtains the token; or
when the level of the N^{th} uplink control signal is a low level, skip performing the access operation.

5. The processor (100) according to claim 2 or 3, wherein an i^{th} execution unit XUᵢ in each execution unit group is specifically configured to:
when i=1, determine a default 0^{th} uplink control signal, wherein a level of the default 0^{th} uplink control signal is a high level; or when 2≤i≤N, receive an (i-1)^{th} uplink control signal output by an (i-1)^{th} execution unit XUᵢ₋₁, wherein i is a natural number, and N is a quantity of execution units comprised in the execution unit group;
generate an i^{th} local access signal according to whether the i^{th} execution unit XUᵢ obtains the access authorization, wherein when the i^{th} execution unit XUᵢ obtains the token, a level of the i^{th} local access signal is a low level; or when the i^{th} execution unit XUᵢ does not obtain the token, the level of the i^{th} local access signal is a high level; and
output an i^{th} uplink control signal by performing an AND operation on the (i-1)^{th} uplink control signal and the i^{th} local access signal, wherein
each resource unit in the at least one resource unit (110) is specifically configured to:
receive an N^{th} uplink control signal sent by an N^{th} execution unit XU_{N} in each execution unit group that is serially connected to the resource unit; and
when a level of the N^{th} uplink control signal is a low level, perform an access operation according to access information transmitted by the execution unit that obtains the token; or
when the level of the N^{th} uplink control signal is a high level, skip performing the access operation.

6. The processor (100) according to any one of claims 3 to 5, wherein the execution unit that obtains the token releases the token after obtaining the output result by using the bus (130).

7. The processor (100) according to any one of claims 2 to 6, wherein not all access delays of all the execution units that form the token ring are the same.

8. The processor (100) according to claim 7, wherein in multiple execution units that belong to a same execution unit group, an access delay of a 1^{st} execution unit XU₁ is the largest, and an access delay of an N^{th} execution unit XU_{N} is the smallest, wherein N is a quantity of execution units comprised in the execution unit group.

9. The processor (100) according to any one of claims 1 to 8, wherein a quantity of execution units comprised in each execution unit group is the same or different.

10. The processor (100) according to any one of claims 1 to 9, wherein the at least one resource unit (110) comprises a calculation unit and/or a storage unit.
